# EUROPEAN PATENT SPECIFICATION

(11) **EP 2 737 801 B1**
(45) Date of publication and mention of the grant of the patent: **27.12.2017**
(21) Application number: 12194689.1
(22) Date of filing: 28.11.2012
(51) Int. Cl.: A21D 2/18, A21D 8/04, A21D 10/00

(54) **Bread dough containing carboxymethyl cellulose and enzyme**
Brotteig mit Carboxymethylcellulose und Enzym
Pâte à pain contenant de la cellulose de carboxyméthyle et des enzymes

(43) Date of publication of application: 04.06.2014
(73) Proprietor: CSM Bakery Solutions Europe Holding B.V., 1019 GM Amsterdam (NL)
(72) Inventor: Held, Wolgang, 55411 Bingen am Rhein (DE); Tronsmo, Kari Margrete, 55411 Bingen am Rhein (DE)
(74) Representative: Nederlandsch Octrooibureau

(56) References cited:
- EP-A1- 0 561 702
- FR-A1- 2 736 802
- DATABASE GNPD [Online] MINTEL; 1 September 2011 (2011-09-01), Anonymous: "Sliced Sweet Bread", XP002696381, retrieved from www.gnpd.com Database accession no. 1616223
- DATABASE GNPD [Online] MINTEL; 1 June 2006 (2006-06-01), Anonymous: "Light Sliced Bread", XP002696382, retrieved from www.gnpd.com Database accession no. 549044
- METTLER E ET AL: "Effects of emulsifiers and hydrocolloids on whole wheat bread quality", CEREAL CHEMISTRY, AACC INTERNATIONAL INC, vol. 70, no. 4, 1 January 1993 (1993-01-01), pages 373-377, XP002220632, ISSN: 0009-0352
- SINGH SIDHU J P ET AL: "INCORPORATION OF CARBOXY METHYL CELLULOSE IN WHEAT FLOUR: RHEOLOGICAL, ALVEOGRAPHIC, DOUGH DEVELOPMENT, GAS FORMATION/RETENTION, BAKING AND BREAD FIRMNESS STUDIES", INTERNATIONAL JOURNAL OF FOOD PROPERTIES, MARCEL DEKKER, NEW YORK, NY, US, vol. 3, no. 3, 1 January 2000 (2000-01-01) , pages 407-419, XP009074472, ISSN: 1094-2912
- LAZARIDOU ET AL: "Effects of hydrocolloids on dough rheology and bread quality parameters in gluten-free formulations", JOURNAL OF FOOD ENGINEERING, BARKING, ESSEX, GB, vol. 79, no. 3, 1 April 2007 (2007-04-01), pages 1033-1047, XP005717254, ISSN: 0260-8774, DOI: 10.1016/J.JFOODENG.2006.03.032
- KULWINDER KAUR ET AL: "EFFECT OF ACETIC ACID AND CMC ON RHEOLOGICAL AND BAKING PROPERTIES OF FLOUR", JOURNAL OF FOOD QUALITY, vol. 22, no. 3, 1 July 1999 (1999-07-01), pages 317-327, XP055061373, ISSN: 0146-9428, DOI: 10.1111/j.1745-4557.1999.tb00560.x
- LUBOMÍR MIKUS ET AL: "Effects of enzymes and hydrocolloids on physical, sensory, and shelf-life properties of wheat bread", CHEMICAL PAPERS, SP VERSITA, HEIDELBERG, vol. 67, no. 3, 20 November 2012 (2012-11-20), pages 292-299, XP035154643, ISSN: 1336-9075, DOI: 10.2478/S11696-012-0286-4

## Description

### TECHNICAL FIELD OF THE INVENTION

The invention relates to a method of preparing a flour-based, non-laminated bread containing carboxymethyl cellulose (CMC) and at least one enzyme selected from cellulase and lipase.

The bread dough employed in the present method exhibits excellent oven spring. In addition, crusty bread products that have been prepared in accordance to the present invention show improved "break opening", meaning that cuts into the surface of the dough open up in an appealing manner during baking.

### BACKGROUND OF THE INVENTION

CMC is a cellulose derivative with carboxymethyl groups bound to some of the hydroxyl groups of the glucopyranose monomers that make up the cellulose backbone. CMC is used in foods as a viscosity modifier or thickener, and to stabilize emulsions in various products such as ice cream.

The use of CMC in bakery products is known in the art. US 6,113,952 describes a process for the manufacture of deep-frozen raw croissant dough pieces which can be directly baked without thawing or fermenting, which comprises the following steps:
a. preparing a yeast dough containing flour, water, yeast, glucono-delta-lactone in an amount of 2 to 10 parts by weight per 1,000 parts by weight of flour, and a water-retaining agent selected from the group consisting of carboxymethylcellulose, derivatives of carboxymethylcellulose, guar gum, xanthan and an alginate, said water-retaining agent being present in an amount of 2 to 10 parts by weight per 1,000 parts by weight of flour;
b. rolling out the yeast dough obtained in step (a) into sheet form and without subjecting said yeast dough to a fermentation step, applying a layer of fat thereon to provide a layered, intermediate product;
c. folding the layered intermediate product obtained in step (b) so that the total number of fat layers is greater than 50;
d. rolling out the folded dough until the desired thickness is obtained, and producing dough pieces from said dough; and
e. deep-freezing the dough pieces without subjecting said dough pieces to a prior fermentation step. This US patent describes a croissant dough containing 5 g CMC per kg of flour and 0.05 g lipase per kg of flour.

US 5,698,245 describes a process for producing bread comprising the step of mixing an effective amount of:
- a maltotriose-forming enzyme that forms maltotriose alone or as the main product from starch, and
- bread dough during a production process.
The US patent mentions the possibility of adding at least enzyme of alpha-amylase, cellulase, catalase, transglutaminase, pentosanase, peroxidase, ascorbate oxidase, glucoamylase and lipase. The patent also mentions addition of an ingredient selected from the group consisting of oil and fat, sugar, salt, aromas, a dairy product, eggs, a yeast nutrient, enzymes, an emulsifying agent, ascorbic acid, an expanding agent, calcium stearoylsulfate, L-cysteine hydrochloride, carboxymethylcellulose sodium, fruit, coffee extract and spices.

US 2011/0117246 describes a composition for preparing gluten-free or gluten-reduced bakery products, comprising enzyme active soy flour and at least one hydrocolloid selected from the group consisting of alginate, carrageenan, guar gum, locust bean gum, pectin, scleroglucan, xanthan gum, carboxymethyl cellulose, methyl cellulose, hydroxypropyl methyl cellulose, and mixtures thereof.

Mikus et al. ("Effects of enzymes and hydrocolloids on physical, sensory, and shelf-life properties of wheat bread". Chemical Papers (2013), 67 (3), p. 292-299) investigated the effect on the physical and sensory properties of a bakery product of two types of enzymes: maltogenic amylase (Novamyl 10000 BG) and lipase (Lipopan F BG, Lipopan Xtra BG), both separately and in combination, and seven hydrocolloids (guar gum, xanthan gum, carrageenan, β-glucan, carob gum, and carboxymethyl cellulose (CMC)).

EP-A 0 561 702 describes a process for the manufacture of laminated doughs. The deep-frozen raw croissant dough pieces described therein may contain CMC and lipase, and can be directly baked without thawing or fermenting.

### SUMMARY OF THE INVENTION

The inventors have unexpectedly discovered that the oven spring behaviour of non-laminated bread products can be improved substantially by applying a combination of CMC and at least one enzyme selected from cellulase and lipase in the dough. More particularly, the inventors have found that this benefit can be achieved by employing CMC in an amount of 0.1-2% by weight of flour; and by employing cellulase in an amount equivalent to 100-600 units of cellulase activity (CU) per kg of flour and/or by employing lipase in an amount equivalent to 20-110 units of lipase activity (LU) per kg of flour.

The bread obtained by the method according to the present invention offers the advantage that dough pieces used in its preparation expand in a very uniform and predictable way during oven baking ('oven spring'). Consequently, these baked dough pieces do not suffer from 'sagging' and retain the relative proportions of the original dough pieces.

In addition, the bread obtained by the method of the present invention offers the advantage of improved "break opening" (called "Ausbund" by German bakers and "grigne" by French bakers), meaning that cuts into the surface of the dough open up in a regular, reproducible manner during baking. This particular property of the present dough is particularly appreciated in, for instance, cut bread, embossed bread, sheeted and folded bread and braided bread.

Accordingly, the invention relates to a method of preparing a non-laminated bread, said method comprising combining flour, water, CMC, an enzyme preparation and optionally further bakery ingredients to produce a non-laminated dough, wherein water is employed in an amount of 40-90% by weight of flour, CMC is employed in an amount of 0.1-2% by weight of flour and wherein the enzyme preparation provides 100-600 units of cellulase activity (CU) per kg of flour and/or 20-110 units of lipase activity (LU) per kg of flour, wherein one LU is the amount of enzyme that releases 1 µmol p-nitrophenol from p-nitrophenyl palmitate under the conditions specified in the description; and baking the dough in an oven at a temperature in excess of 160°C.

### DETAILED DESCRIPTON OF THE INVENTION

The present invention relates to a method of preparing a non-laminated bread, said method comprising combining flour, water, CMC, an enzyme preparation and optionally further bakery ingredients to produce a non-laminated dough, wherein water is employed in an amount of 40-90% by weight of flour, CMC is employed in an amount of 0.1-2% by weight of flour and wherein the enzyme preparation provides 100-600 units of cellulase activity (CU) per kg of flour and/or 20-110 units of lipase activity (LU) per kg of flour, wherein one LU is the amount of enzyme that releases 1 µmol p-nitrophenol from p-nitrophenyl palmitate under the conditions specified in the description; and baking the dough in an oven at a temperature in excess of 160°C..

The term "carboxymethyl cellulose" of "CMC" as used herein refers to a cellulose derivative with carboxymethyl groups (-CH₂-COOH) bound to some of the hydroxyl groups of the glucopyranose monomers that make up the cellulose backbone. CMC is often used as its sodium salt, sodium carboxymethyl cellulose. The chemical formula of CMC is C₆H₇O₂(OR₁)(OR₂)(OR₃), where R₁, R₂, R₃ each may be one of the following:
- H
- CH₂COONa
- CH₂COOH.

The term "bakery ingredient" as used herein refers to edible ingredients that can be used in the manufacture of baked bread. Examples of bakery ingredients include flour, water, fat, emulsifiers, enzymes, oxidizing agents, reducing agents, yeast, chemical leavening agent, proteins, malts, malt extracts, starches, guar, organic salts, anorganic salts, acids, preferments, sugars, dairy ingredients and flavours.

One unit of cellulase activity (1 CU) equals the amount of enzyme that hydrolyses an amount of CMC per hour giving an amount of reducing sugars equivalent to 0.5 mg glucose under the conditions specified hereinafter:
- The CMC substrate is prepared by suspending 18 g of CMC (Blanose R.1 10, Novacel Paris, France) in 900 ml water plus 100 ml acetate buffer pH 4.6 for one hour, followed by filtering off the particulate matter.
- A di-nitro-salicylic acid solution is prepared as follows:
   A. Dissolve 13.5 g NaOH pellets in 300 ml water.
   B. Dissolve 8.8 g di-nitro-salicylic acid in 400 ml water at 60 °C, add 225 g KNa-tartrate dissolved in 400 ml water and mix.
   C. Then mix the 300 ml NaOH solution with the di-nitro-salicylic acid/KNa-tartrate solution.
   D. Prepare a solution incorporating 2.2 g NaOH pellets and 10 g 100% phenol in 100 ml of water and, additionally, a sulfite solution incorporating 37.5 g NaHSO₃ in 100 mL water.
   E. To prepare the di-nitro-saliscylic acid working solution mix 69 mL of solution (D) with solution (C) and add 23.2 ml of the NaHSO₃ solution. The mixture is ready for use 5 days after preparation.
- The enzyme incubation is carried out by adding 1 ml of the CMC solution to 1 ml sample solution and incubate for 60 min at 37 °C.
- Terminate the reaction by adding 1 ml of NaOH 1 mol/l to 1 ml of the incubation mixture.
- Then add 3 ml of the di-nitro-salicylic acid working solution, mix and heat for 5 min in boiling water and, after cooling down, to the mixture 19 ml of water is added.
- Finally the absorbance at 540 nm is measured in a spectrophotometer and compared with a calibration curve to quantify the cellulase activity.

One unit of lipase activity (1 LU) equals the amount of enzyme that releases 1 µmol p-nitrophenol per minute from p-nitrophenyl palmitate under the conditions specified under the conditions specified hereinafter:
- The chromogenic substrate p-nitrophenyl palmitate (pNPP) is dissolved in 2-propanol (3 mg/mL).
- While vigorously stirring 3.5 ml of this solution is drop-wise added to 46.5 ml 100 mmol/L TRIS buffer pH 8.5 containing 1% Triton X-100.
- At time t=0, 50 µl of a sample is mixed with 1 ml substrate solution.
- While incubating at 37 °C the change in absorption is measured at 405 nm against a sample blank.
- The slope (ΔOD/time) of the linear part of the curve is used as a measure for the lipolytic activity and is compared with a calibration curve to quantify the lipase activity.

The term "non-laminated dough" refers to a dough that is not a laminated dough, i.e. a dough that has not been prepared by spreading it with, for instance, solid fat or margarine and repeatedly folding and rolling out. Laminated dough is typically used to prepare puff pastry and croissants.

According to a preferred embodiment of the present invention the dough contains 0.2-1.5%, most preferably 0.2-1.0% CMC by weight of flour.

The CMC employed in accordance with the present invention is suitably selected from CMC (protonated CMC), sodium CMC, potassium CMC and combinations thereof. Most preferably, the CMC employed is sodium CMC

The degree of substitution of the CMC used in accordance with the present invention preferably lies in the range more preferably in the range of 0.7-1.4 and most preferably in the range of 0.75-1.0 Here the "degree of substitution" refers to the average number of hydroxyl groups per glucopyranose monomer that have been substituted with carboxymethyl groups.

Typically, the CMC employed has a molecular weight of more than 10,000, more preferably of more than 12,000 g/mol and most preferably at least 15,000 g/mol.

The dough that is produced in the method of the present invention preferably contains a cellulase in an amount equivalent to 140-550 CU per kg of flour, most preferably 200-400 CU per kg of flour.

According to another preferred embodiment, the cellulase is contained in the dough in an amount equivalent to 30-200 CU per g of CMC, more preferably in an amount equivalent to 40-180 CU per g of CMC and most preferably 60-130 CU per g of CMC.

In accordance with another preferred embodiment, the dough contains lipase in an amount equivalent to 25-100 LU per kg of flour, most preferably 30-90 LU per kg of flour.

Advantageously, the lipase is contained in the dough in an amount equivalent to 6-40 LU per g of CMC, more preferably in an amount equivalent to 8-33 LU per g of CMC and most preferably 10-30 LU per g of CMC.

The cellulase employed may have endocellulase as well as excocellulase activity. Preferably, the cellulase exhibits significant endocellulase activity.

Besides flour, water, CMC and cellulase/lipase, the dough may suitably contain other ingredients such as fat, emulsifier, sugars, leavening agent (yeast and/or baking powder), other enzymes, proteins, organic acids etc. According to a particularly preferred embodiment, the dough is a yeast leavened dough. According to another preferred embodiment, the dough contains 0.7-1.5%, more preferably 0.8-1.3% and most preferably 0.9-1.2% salt by weight of flour, said salt being selected from sodium chloride, potassium chloride and combinations thereof.

The benefits of the present invention are particularly appreciated in crusty bread, e.g. crusty bread rolls or baguette. According to one preferred embodiment the dough that is produced in the method of the present invention advantageously is a dough portion for a crusty bread roll. Typically such a dough portion has a weight of 10-100 g, more preferably of 20-60 g and most preferably of 30-50 g.

According to another preferred embodiment, the dough that is produced in the method of the present invention is a dough portion for a baguette. Typically, such a baguette dough portion has a weight of 100-1000 g, more preferably of 150-750 g and most preferably of 200-300 g.

The dough that is produced in the method of the present invention offers the advantage that it exhibits excellent "break opening" during baking. Thus, if superficial cuts have been made into the surface of the dough portions prior to baking, these dough portions open up in a regular, predictable manner during baking, meaning that appealing looking rolls or baguettes can be reproducibly produced. Also if the surface of the dough portions has been embossed (as in the preparation of e.g. Kaiser rolls) or if the dough portions have been obtained by braiding, the dough portions produced by the method of the present invention develop and retain an appealing shape during baking. Accordingly, in a preferred embodiment the dough is a cut dough portion, an embossed dough portion, a sheeted and folded bread dough portion or a braided dough portion.

The benefits of the present invention are particularly appreciated in the preparation of cut bread rolls and baguettes. Thus, a particularly advantageous embodiment of the present invention relates to a method that produces a dough portion, preferably a leavened (proofed) dough portion that carries one or more cuts (such as in baguettes). Typically, these cuts have a depth of more than 5 mm, more preferably of 7-50 mm and most preferably of 8-30 mm. Expressed differently, the depth of the cuts preferably is at least 10%, most preferably at least 40% of the height of the (non-leavened) dough portion.

The dough that is produced in the method of the present invention preferably does not have a reduced gluten content. Typically, the gluten content of the dough lies in the range of 6-20% by weight of flour. More preferably, the gluten content is in the range of 8-15% by weight of flour.

According to another preferred embodiment, the present dough contains no added maltotriose-forming enzyme.

Preferably, the production of the non-laminated dough in the present method comprises the combining of the flour and the other aforementioned dough ingredients with a leavening agent, notably a leavening agent selected from yeast, baking soda and combinations thereof. Most preferably, the leavening agent is yeast.

Advantageously, in the present method the dough is divided into dough portions, especially dough portions for making baguettes or bread rolls, such as crusty bread rolls. Preferably, these dough portions have the characteristics of the dough portions described herein before.

According to a particularly preferred embodiment superficial cuts are applied to the surface of the dough portions. These cuts may be applied before or after proofing. The depth of these cuts typically is at least 5 mm, more preferably 7-50 mm and most preferably 8-30 mm.

Preferably, CMC is employed in the present method in the preparation of the dough in an amount of 0.2-1.5% by weight of flour, most preferably of 0.2-1.0% by weight of flour.

According to one preferred embodiment the production of the dough in the present method comprises the use of cellulase in an amount equivalent to 140-550 CU per kg of flour, most preferably 200-400 CU per kg of flour.

The cellulase is preferably applied in the dough in an amount equivalent to 30-200 CU per g of CMC, more preferably in an amount equivalent to 40-180 CU per g of CMC and most preferably 60-130 CU per g of CMC.

In accordance with another preferred embodiment, the production of the dough comprises the use of lipase in an amount equivalent to 25-100 LU per kg of flour, most preferably 30-90 LU per kg of flour.

The lipase is advantageously applied in the dough in an amount equivalent to 6-40 LU per g of CMC, more preferably in an amount equivalent to 8-33 LU per g of CMC and most preferably 10-30 LU per g of CMC.

The dough that is produced in the present method preferably is not frozen before baking. Even though it is preferred not to freeze the dough before baking, it may be beneficial to keep the dough in an unfrozen state at a low temperature, especially before proofing of the dough. In case of yeast-containing dough the proofing of the dough can be effectively delayed in this manner.

Preferably, the present method comprises the baking of the dough (after cutting and/or proofing) in an oven at a temperature of 180-270 °C. Advantageously, the baked product is a cut bread, an embossed bread, a sheeted and a folded bread or a braided bread. Even more preferably, the baked product is cut bread, most preferably a cut bread roll or baguette. It is further preferred that the bread is a crusty bread, more preferably a crusty bread roll or a baguette.

The invention is further illustrated by the following non-limiting examples.

### EXAMPLES

### Example 1

Bread rolls were prepared on the basis of the recipe that is shown in Table 1.

**Table 1**

| **Ingredients** | **Baker's %** |
|---|---|
| Wheat flour | 100 |
| Water | 57 |
| Fresh compressed baker's yeast | 3 |
| Salt | 2 |
| Bread Improver | 4 |

Two different bread improvers were employed. The compositions of these bread improvers are shown in Table 2.

**Table 2**

| **Ingredients** | **Wt.%** | |
|---|---|---|
| | **Improver A** | **Improver B** |
| Wheat flour | 51.195 | 51.075 |
| Sugar | 30.000 | 30.000 |
| DATEM with 20% CaCO₃ | 12.000 | 12.000 |
| CMC ¹ | 6.000 | 6.000 |
| Ascorbic acid | 0.425 | 0.425 |
| Amylase | 0.220 | 0.220 |
| Glucose oxidase | 0.060 | 0.060 |
| Hemicellulase | 0.100 | 0.100 |
| Cellulase ² | | 0.120 |

| | | |
|---|---|---|
| ¹ Degree of substitution: 0.82; sodium content: 8.3 wt.% ² EC 3.2.1.4 - Standardized activity 10000 CXU/g | | |

The bread rolls were prepared as follows:
- Dough was kneaded in a conventional spiral mixer at 2 minutes slow and 6 minutes fast speed.
- Dough was rested for 5 minutes and then fed to an automatic line (dough extruder Fortuna KM, shaping/cutting Kövy KA/S) where the dough pieces were scaled to 60g, rounded and rolled.
- The dough pieces were cut to a depth of 30-50% of the height of the dough piece and then placed on a tray with textile cover with the cut on the bottom side.
- The trays were put into a retarder, where the temperature regime goes down to +5°C for 5 hours at 70% relative humidity, then kept at +15°C for 5 hours at 90% relative humidity and then at +5°C for approximately 3 hours at 80% humidity.
- Next, the fermented dough pieces were taken out of the retarder, turned around on a tray and put into the oven at 230°C for 18 minutes with steam.

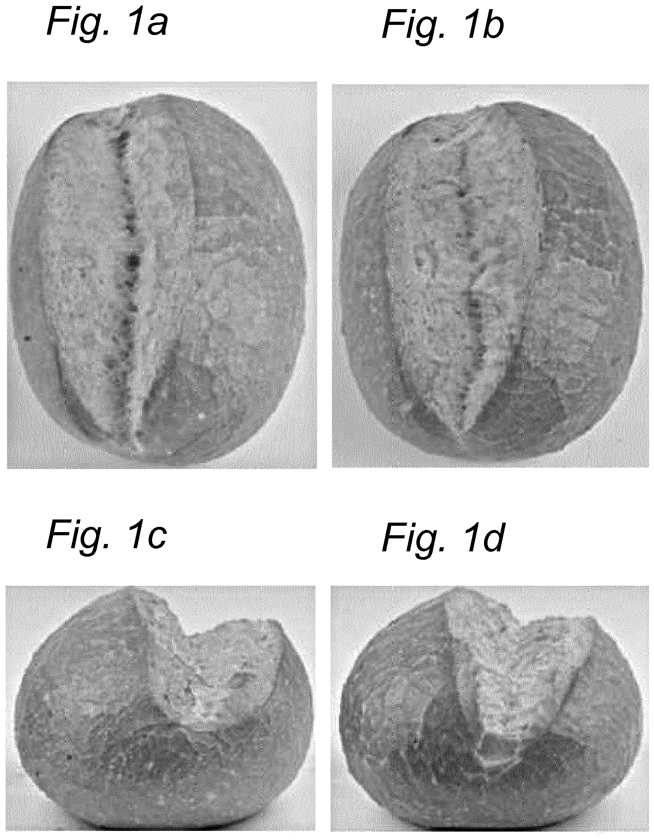

Photos were made of representative samples of the bread rolls prepared with and without cellulase. Figures 1a and 1c show a bread roll that was prepared with cellulase. Figures 1b and 1d show a bread roll that was prepared without cellulase.

The doughs as well as the baked breads rolls were evaluated by an expert panel. The panel found that the dough with added cellulase was more firm and dry than the control. Furthermore, the baked bread rolls containing added cellulase showed a bit more volume, and the break was more appealing.

### Example 2

Bread rolls were prepared on the basis of the recipe shown in Table 1 of Example 1 and using the method described in the same Example.

The compositions of the bread improvers used this time are shown in Table 3.

**Table 3**

| **Ingredients** | **Wt.%** | |
|---|---|---|
| | **Improver A** | **Improver B** |
| Wheat flour | 51.195 | 51.160 |
| Sugar | 30.000 | 30.000 |
| DATEM with 20% CaCO₃ | 12.000 | 12.000 |
| CMC | 6.000 | 6.000 |
| Ascorbic acid | 0.425 | 0.425 |
| Amylase | 0.220 | 0.220 |
| Glucoseoxidase | 0.060 | 0.060 |
| Hemicellulase | 0.100 | 0.100 |
| Lipase ¹ | | 0.035 |

| | | |
|---|---|---|
| ¹ EC 3.1.1.32 - Standardized activity 2750 DLU/g | | |

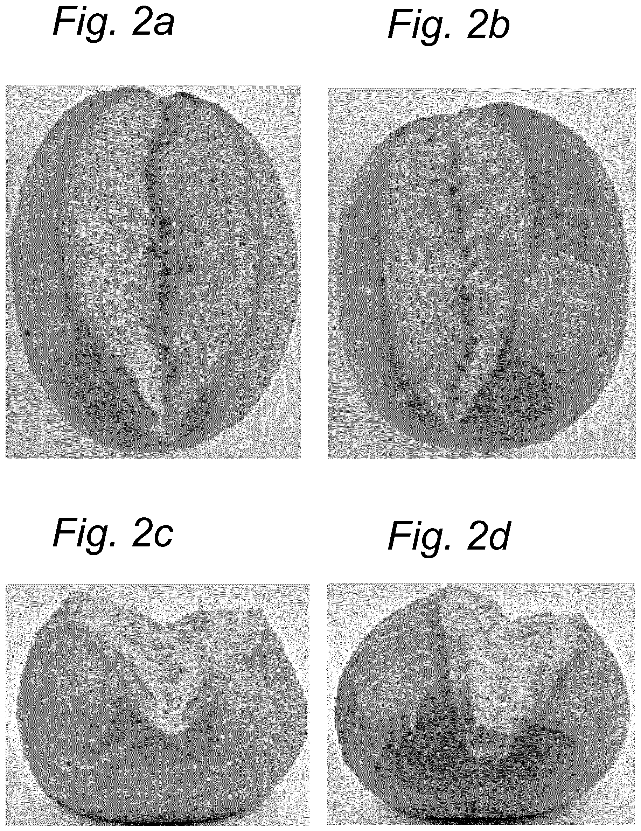

Photos were made of representative samples of the bread rolls prepared with and without lipase. Figures 2a and 2c show a bread roll that was prepared with lipase. Figures 2b and 2d show a bread roll that was prepared without lipase.

The doughs as well as the baked breads rolls were evaluated by an expert panel. The panel found that the dough with added lipase was more firm than the control. Furthermore, the baked bread rolls containing added lipase showed a bit more volume, and the break was more appealing.

## Claims

1. A method of preparing a non-laminated bread, said method comprising combining flour, water, CMC, an enzyme preparation and optionally further bakery ingredients to produce a non-laminated dough, wherein water is employed in an amount of 40-90% by weight of flour, CMC is employed in an amount of 0.1-2% by weight of flour and wherein the enzyme preparation provides 100-600 units of cellulase activity (CU) per kg of flour and/or 20-110 units of lipase activity (LU) per kg of flour, wherein one LU is the amount of enzyme that releases 1 µmol p-nitrophenol from p-nitrophenyl palmitate under the conditions specified in the description; and baking the dough in an oven at a temperature in excess of 160°C.

2. Method according to claim 2, wherein the dough is divided into dough portions and the dough portions are cut, embossed or sheeted and folded.

3. Method according to claim 3, wherein the dough is divided into dough strings and wherein the dough strings are braided to form a braided dough portion.

4. Method according to claim 2 or 3, wherein the dough portion is proofed before or after the cutting, the embossing, the sheeting and folding, or the braiding.

## Patentansprüche

1. Verfahren zur Herstellung eines nicht-laminierten Brots, bei dem Mehl, Wasser, CMC, eine Enzymzubereitung und gegebenenfalls weitere Bäckereizutaten zur Herstellung eines nicht-laminierten Teigs kombiniert werden, wobei Wasser in einer Menge von 40-90 Gewichts-% Mehl verwendet wird, CMC in einer Menge von 0,1-2 Gewichts-% Mehl verwendet wird und wobei die Enzymzubereitung 100-600 Einheiten Cellulaseaktivität (CU) pro kg Mehl und/oder 20-100 Einheiten Lipaseaktivität (LU) pro kg Mehl liefert, wobei ein LU die Enzymmenge ist, die ein µmol p-Nitrophenol aus p-Nitrophenylparmitat unter den in der Beschreibung spezifizierten Bedingungen freisetzt, und der Teig in einem Ofen bei Temperaturen oberhalb von 160°C gebacken wird.

2. Verfahren nach Anspruch 2, wobei der Teig in Teigportionen geteilt wird und die Teigportionen geschnitten, geprägt oder ausgewalzt und gefaltet werden.

3. Verfahren nach Anspruch 3, wobei der Teig in Teigstränge geteilt wird und die Teigstränge zur Bildung einer geflochtenen Teigportion geflochten werden.

4. Verfahren nach Anspruch 2 oder 3, wobei die Teigportionen vor oder nach dem Schneiden, Prägen, Auswalzen und Falten oder dem Flechten gegärt wird.

## Revendications

1. Méthode de préparation d'un pain non stratifié, ladite méthode comprenant la combinaison de farine, d'eau, de CMC, d'une préparation enzymatique et de manière facultative d'autres ingrédients de boulangerie pour produire une pâte non stratifiée, dans laquelle l'eau est utilisée selon une quantité de 40 à 90 % en poids de farine, la CMC est utilisée selon une quantité de 0,1 à 2 % en poids de farine et dans laquelle la préparation enzymatique fournit 100 à 600 unités d'activité cellulase (CU) par kg de farine et/ou 20 à 100 unités d'activité lipase (LU) par kg de farine, dans laquelle une LU est la quantité d'enzyme qui libère 1 µmol de p-nitrophénol à partir de palmitate de p-nitrophényle sous les conditions spécifiées dans la description ; et la cuisson de la pâte dans un four à une température supérieure à 160 °C.

2. Méthode selon la revendication 2, dans laquelle la pâte est divisée en portions de pâte et les portions de pâte sont découpées, gaufrées ou couchées et pliées.

3. Méthode selon la revendication 3, dans laquelle la pâte est divisée en cordons de pâte et dans laquelle les cordons de pâte sont tressés pour former une portion de pâte tressée.

4. Méthode selon la revendication 2 ou 3, dans laquelle la portion de pâte est imperméabilisée avant ou après la découpe, le gaufrage, le couchage et le pliage, ou le tressage.
